Europäisches Patentamt

European Patent Office

Office européen des brevets

(11) Veröffentlichungsnummer: **0 423 615 A1**

(12) **EUROPÄISCHE PATENTANMELDUNG**

(21) Anmeldenummer: **90119456.3**

(22) Anmeldetag: **11.10.90**

(51) Int. Cl.5: **A61C 3/06, A61C 5/10**

(30) Priorität: **18.10.89 DE 3934708**

(43) Veröffentlichungstag der Anmeldung:
**24.04.91 Patentblatt 91/17**

(84) Benannte Vertragsstaaten:
**AT CH DE ES FR GB IT LI NL**

(71) Anmelder: **DEGUSSA AG**
**Weissfrauenstrasse 9**
**W-6000 Frankfurt (Main)(DE)**

(72) Erfinder: **Hamm, Walter**
**Weiherstrasse 18a**
**W-7597 Rheinau 2(DE)**
Erfinder: **Ohngemach, Klaus**
**Alte Renninger Strasse 67**
**W-7257 Weil der Stadt(DE)**
Erfinder: **Schaubode, Karl-Heinz**
**Schlossergasse 3**
**W-7600 Offenburg(DE)**

(54) **Verfahren und Vorrichtung zur Herstellung von Primärkronen.**

(57) Zur Herstellung von Primärkronen in der Dentaltechnik werden gegossene Formteile auf der Oberfläche ausschließlich durch Schleifen nachbearbeitet. Man verwendet zylindrische und konische Schleifkörper, die in ihrer Konizität von 0 bis 8° der Konizität der Primärkronen entsprechen und achsparallel zur Konus achse der Primärkronen geführt werden.

Fig.

## VERFAHREN UND VORRICHTUNG ZUR HERSTELLUNG VON PRIMÄRKRONEN

Die Erfindung betrifft ein Verfahren und eine Vorrichtung zur Herstellung von zylindrischen und konischen Primärkronen in der Zahntechnik durch Gießen entsprechender hohler Formkörper und mechanischer Nachbearbeitung der äußeren Oberfläche zur Erzeugung einer exakten und glatten Kontur.

In der Zahnprothetik wird in vielen Fällen die Konuskronen-Technik angewendet. Dazu wird auf einem Arbeitsmodell des betreffenden präparierten Zahns eine konische Primärkrone geformt. Die Herstellung der Primärkronen erfolgt normalerweise durch Präzisionsgießen entsprechender Formkörper über ein Wachsmodell. Die äußere Oberfläche dieser Formkörper muß anschließend durch Fräsen, Schleifen und Polieren zu einer konturengenauen Primärkrone mit glatter Oberfläche weiterverarbeitet werden. Dieses Verfahren ist jedoch sehr zeitaufwendig.

Es war daher Aufgabe der vorliegenden Erfindung, ein Verfahren zur Herstellung von zylindrischen und konischen Primärkronen in der Zahntechnik durch Gießen entsprechender hohler Formkörper und mechanischer Nachbearbeitung der äußeren Oberfläche zur Erzeugung einer exakten und glatten Kontur zu entwickeln, das wenig zeitaufwendig ist. Außerdem sollte eine entsprechende Vorrichtung entwickelt werden.

Diese Aufgabe wird erfindungsgemäß dadurch gelöst, daß die mechanische Nachbearbeitung ausschließlich durch Schleifen mit zylindrischen und konischen Schleifkörpern mit unterschiedlicher Schleifmittelkörnung erfolgt, die in ihrer Konizität der Konizität der Primärkronen entsprechen Und die achsparallel zur Konusachse der Primärkronen geführt werden.

Der Konuswinkel liegt hierbei zwischen 0 und 8°.

Mit diesem erfindungsgemäßen Schleifverfahren wird der Zeitaufwand bei der Herstellung von Primärkronen wesentlich vermindert.

Die entsprechende Vorrichtung besteht aus einem schwenkbaren Einspannelement für die Primärkrone, einem rotierenden Befestigungselement für den auswechselbaren Schleifkörper und einem Gestell, das es erlaubt, die Rotationsachse des Schleifkörpers parallel zur Konusachse der Primärkrone zu führen, wobei der Schleifkörper aus einem mit einem Befestigungsstift versehenen metallischen Zylinder oder Kegelstumpf mit einem Konuswinkel zwischen 0 und 8° besteht, auf dessen Mantelfläche ein Schleifbelag auswechselbar aufgebracht ist.

Vorzugsweise besteht dieser Schleifbelag aus einem entsprechend zugeschnittenen Schleifpapier, das selbstklebend ist und spaltfrei die Mantelfläche umgibt. Sei Verschleiß kann das selbstklebende Schleifpapier problemlos entfernt und durch ein neues ersetzt werden. Dadurch ist es auch möglich, Schleifpapiere mit verschiedenen Schleifmittelkörnungen nacheinander einzusetzen.

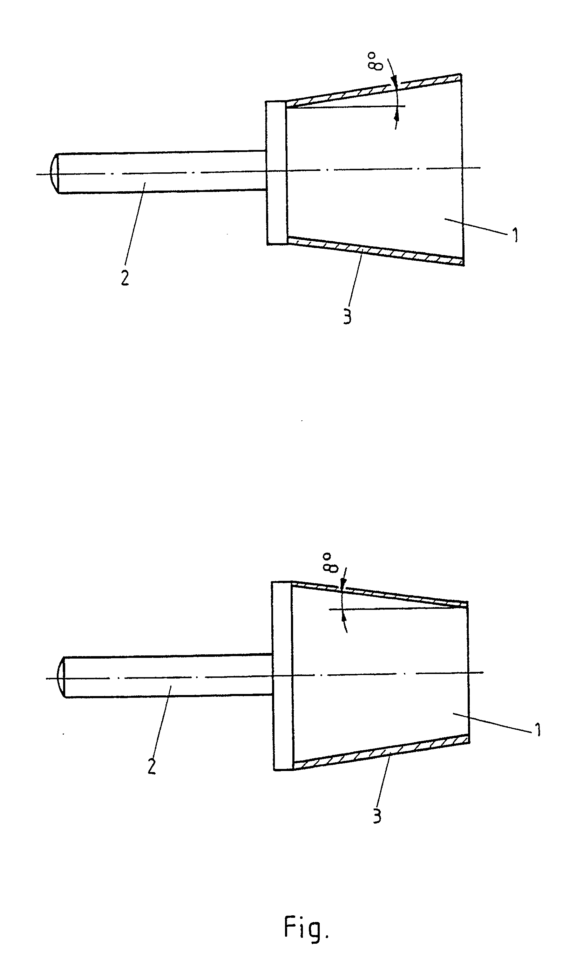

Die Abbildung zeigt schematisch einen Schleifkörper im Längsschnitt. Er besteht aus einem metallischen Kegelstumpf (1), in dem ein Befestigungsstift (2) angebracht ist, mit dem der Schleifkörper in ein rotierendes Werkzeug eingespannt werden kann. Die Mantelfläche des Kegelstumpfs (1) ist mit einem Schleifbelag (3) bedeckt. Der Befestigungsstift (2) kann sowohl auf der größeren als auch auf der kleineren Basisfläche des Kegelstumpfs (1) angebracht sein.

## Ansprüche

1. Verfahren zur Herstellung von zylindrischen und konischen Primärkronen in der Dentaltechnik durch Gießen entsprechender hohler Formkörper und mechanischer Nachbearbeitung der äußeren Oberfläche zur Erzeugung einer exakten und glatten Kontur,
dadurch gekennzeichnet,
daß die mechanische Nachbearbeitung ausschließlich durch Schleifen mit zylindrischen und konischen Schleifkörpern mit unterschiedlicher Schleifmittelkörnung erfolgt, die in ihrer Konizität der Konizität der Primärkronen entsprechen und die achsparallel zur Konusachse der Primärkronen geführt werden.

2. Vorrichtung zur Herstellung von Primärkronen nach Anspruch 1, bestehend aus einem schwenkbaren Einspannelement für die Primärkrone, einem rotierenden Befestigungselement für den auswechselbaren Schleifkörper und einem Gestell, das es erlaubt, die Rotationsachse des Schleifkörpers parallel zur Konusachse der Primärkrone zu führen,
dadurch gekennzeichnet,
daß der Schleifkörper aus einem mit einem Befestigungsstift (2) versehenen metallischen Zylinder oder Kegelstumpf (1) mit einem Konuswinkel zwischen 0 und 8° besteht, auf dessen Mantelfläche ein Schleifbelag (3) auswechselbar aufgebracht ist.

3. Vorrichtung nach Anspruch 2,
dadurch gekennzeichnet,
daß der Schleifbelag (3) aus einem entsprechenden zugeschnittenen Schleifpapier besteht, das selbstklebend ist und spaltfrei die Mantelfläche umgibt.

Fig.

Europäisches
Patentamt

# EUROPÄISCHER
# RECHERCHENBERICHT

Nummer der Anmeldung

**EP 90 11 9456**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 086 167 (BARRUT) <br> * Figuren 26,27 * <br> – – – | 1 | A 61 C 3/06 <br> A 61 C 5/10 |
| A,P | EP-A-0 353 638 (DENTSPLY INTERNATIONAL) <br> * Seite 5, Zeilen 17-24; Figur 4 * <br> – – – | 1 | |
| A | DE-A-1 502 618 (GEEL) <br> * Seite 1, Zeile 21 - Seite 2, Zeile 5; Figuren 1,3 * <br> – – – | 2,3 | |
| A | US-A-3 614 845 (COOK) <br> * Seite 1, Zeilen 39-43; Seite 2, Zeilen 16-19; Figur 6 * <br> – – – – – | 2,3 | |

| RECHERCHIERTE SACHGEBIETE (Int. Cl.5) |
|---|
| A 61 C <br> B 24 D |

Der vorliegende Recherchenbericht wurde für alle Patentansprüche erstellt

| Recherchenort | Abschlußdatum der Recherche | Prüfer |
|---|---|---|
| Den Haag | 04 Dezember 90 | VLECK J.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument
 
& : Mitglied der gleichen Patentfamilie, übereinstimmendes Dokument